# EUROPEAN PATENT APPLICATION

(11) **EP 2 474 721 A1**
(43) Date of publication of application: **11.07.2012**
(21) Application number: 11305023.1
(22) Date of filing: 11.01.2011
(51) Int. Cl.: F01N 13/08, F01N 13/18

(54) **Connection device between tubes and clamping system including such connection device**

(71) Applicant: Etablissements CAILLAU, 92130 Issy-les-Moulineaux (FR); Faurecia Systèmes d'Echappement, 92000 Nanterre (FR)
(72) Inventor: Drivon, Stéphane, 41200 Romorantin (FR); Fink, Bernd Hagen, 86500 Kutzenhausen / Rommelsried (DE)
(74) Representative: Intès, Didier Gérard André

(57) **Abstract**

The connection device comprises a washer (16) adapted to be inserted between respective sealing surfaces (12B, 14B) of two tubes (12, 14) to be connected by a clamping system (10). The device comprises a deflector arrangement (18), supported by the washer and comprising at least one deflector part (30) to be located in a stream of fluid circulating in the tubes, at a distance from an inner periphery (16A) of the washer (16). The clamping system comprises a collar (10) suitable for being tightened on the respective bearing surfaces (12A, 14A) of the tubes and the washer (16) is linked to the collar for being inserted between respective sealing surfaces(12B, 14B) of the tubes.

## Description

The present invention relates to a connection device comprising a washer adapted to be inserted between respective sealing surfaces of two tubes to be connected by a clamping system.

A fluid, such as gas, in particular exhaust gas of a combustion engine, circulates in the tubes.

Such a connection device is known, for example by US 7,399,005. The washer facilitates the connection between the tubes and, if provided with a sealing portion, prevents fluid leakage at the connection between the tubes.

In this region, the inner periphery of the tubes presents a specific shape enabling their connection. In most cases, this specific shape comprises a recess causing a local increase in diameter. JP 2005172156 proposes to fit an inner pipe in the connection region, so as to cover the recess inwardly. This inner pipe is an additional element, which must be put into place separately from the clamping system.

FR 2 906 864 proposes an improvement, consisting in having the washer supporting a cylindrical wall which covers the recess when the washer is secured to the tubes.

In exhaust ducts of combustion engines, there is a need for the exhaust gas to be homogeneous, so as to avoid local accumulation of particles. In some applications, a chemical agent is added to the gas so as to cause chemical reactions making the gas safer for the environment. In such case, it is necessary for the agent to be homogeneously mixed with the gas, so as to ensure its proper effect. Thus there is a need to arrange mixing devices within the tubes, for mixing the fluid circulating therein and ensuring its homogeneity.

Thus, the technical problem underlying the invention is to provide a device that can contribute to homogeneity of the flow of fluid circulating in two tubes connected together.

This object is achieved with a connection device comprising a washer adapted to be inserted between respective sealing surfaces of two tubes to be connected by a clamping system, the device comprising a deflector arrangement, supported by the washer and comprising at least one deflector part to be located in a stream of fluid circulating in the tubes, at a distance from an inner periphery of the washer.

Thus, in the invention, the washer not only has the same function as washers of the prior art, for example as a gasket for ensuring leaktight connection between the tubes, but also serves as a support, to support a deflector arrangement capable of causing local deflection of the flow of fluid in the vicinity of the connected ends of the tubes, thus enhancing homogeneity of the fluid and avoiding local accumulation of particles carried by the fluid, in the connection region.

The deflector arrangement is thus located in the region where the tubes are connected. Being a deflector arrangement, which is located at a distance (a radial distance) from an inner periphery of the washer, it has an impact on the flow of fluid as such (that is in a vein of fluid corresponding to the inner diameter of the tubes), not only in the recess of the connection region. Compared to a deflector arrangement which would be put into place in a region of a tube other than the connection region, the deflector arrangement is put much more easily into place and more reliably supported so as not to move with respect to the tubes. In other words, the invention takes advantage of the connection region to add a deflector arrangement in the flow of fluid without a need of extra supporting means and without a need of a specific manufacturing or securing step for arranging the deflector arrangement in the flow of fluid. The deflector arrangement can be secured to the washer outside the tubes, before putting the washer into place, thus making such securing easy and reliable. Also, in case the failures, the deflector arrangement can be repaired or replaced easily by disconnecting the tubes and dismounting the washer, without a need to dismount numerous components. Also, being simply supported by the washer, the deflector arrangement can be particularly light in weight and, in itself, not cause a significant increase of weight.

Advantageously, the deflector arrangement comprises a supporting ring supported by the washer; said supporting ring supporting said at least one deflector part.

The supporting ring can be made in one piece with the washer (or with an element of the washer), or it can be made as an extra part, secured to the washer. The deflector part can be easily secured to the supporting ring and, thus easily secured to the washer.

Advantageously, the at least one deflector part is secured to the supporting ring by at least one of welding, riveting, clinching or crimping.

In an advantageous embodiment, the deflector arrangement comprises a plurality of deflector parts, formed in one common deflector element. The common deflector element is easy to manufacture and to secure to the washer. Advantageously, the common deflector element has a serpentine shape.

Advantageously, the at least one deflector part comprises at least one wall portion arranged substantially axially. This axially extending wall portion can be arranged so as to cover a recess of the inner periphery of the tubes, in the connection region.

Advantageously, the at least one deflector part comprises at least one inclined portion which is inclined with respect to the axial direction.

Advantageously, the at least one deflector part comprises at least one wall portion having a tongue cut out therein and bent.

The deflector parts, which extend in the flow of fluid, radially inside the washer generate turbulences in the flow of fluid, thus having a mixing effect which ensure a proper homogeneity of the fluid and, if a chemical agent is used, a proper mixing of such agent with the fluid.

As mentioned above, the washer can have a sealing portion for engaging the respective sealing surfaces of the tubes. Advantageously, this sealing portion is arranged in a plane which is inclined with respect to the axial direction. Depending on the orientation of the sealing surfaces of the tubes with respect to the axial direction, the plane in which the sealing portion of the washer is arranged can be substantially perpendicular to the axial direction.

The invention also relates to a clamping system for connecting two tubes together in a leaktight manner, the system comprising a collar suitable for being tightened on respective bearing surfaces of the tubes.

According to the invention, the clamping system comprises a connection device according to the invention and the washer is linked to the collar for being inserted between respective sealing surfaces of the tubes.

Thus, the washer can be adapted to the collar. In an advantageous embodiment, the washer can be secured to the collar, so that the washer and the collar can be manipulated as a whole for mounting the collar/washer assembly to one of the tubes, before connecting the other tube. Also, the clamping system can comprise pre-fitting means for securing the collar to one of the tubes, before connecting the other tube. Advantageously, the pre-fitting means are arranged on the washer. More precisely, the washer is advantageously provided with securing means (e.g. fixing tabs) for securing the washer to the collar and with pre-fitting means (e.g. pre-fitting tabs) for securing the collar/washer assembly to one of the tubes, before connecting the other tube.

Advantageously, the collar has a band, the inside periphery of which defines a setback, and the washer has a sealing portion that extends inside said setback.

The sealing surfaces of the tubes can thus be located in this setback when the tubes are connected together, and the sealing portion of the washer can thus extend between these sealing surfaces, in the collar's setback.

It is also advantageous for that at least part of the supporting ring to extend axially from the inner periphery of the washer so as to cover said setback inwardly.

As mentioned above, the inner surfaces of the tubes can present a recess in the connection region between the tubes. This recess can be due to a specific shape of the tubes, enabling them to be connected together by engaging together respective connection parts thereof, to be located in the collar's setback. Thus, the axially extending part of the supporting ring can cover this recess so as to prevent turbulences to occur due to the flow of fluid penetrating into the recess.

The invention will be well understood and its advantages will appear more clearly on reading the following detailed description of embodiments shown by way of examples. The description refers to the accompanying drawings, in which:
- Figure 1 is a perspective view of a clamping system according to the invention, comprising a connection device according to the invention and also showing respective portions of the tubes to be connected;
- Figure 2 is a plan view of this clamping system, taken according to arrow II of figure 1, and also showing respective portions of the tubes to be connected;
- Figure 3 is a cross-section of the system of figure 1, taken in plane III shown in figure 1;
- Figure 3A is an enlarged view of part A of figure 3;
- Figure 4 is a perspective view of the assembly of the washer and the deflector arrangement, taken from the opposite side than figure 1;
- Figures 5 and 6 are views analogous to the one of figure 3, showing variant embodiments;
- Figure 7 is also a view analogous to the one of figure 3, showing a variant embodiment adapted to tubes having another shape at their respective connection portions;
- Figure 7A is an enlarged view of part B of figure 7;
- Figure 8 is a view of the assembly of the washer and the deflector arrangement shown in figure 7, taken from arrow VIII of figure 7;
- Figures 9 and 10 show the assembly of a deflector arrangement to a supporting ring according to a variant embodiment suitable for the invention; and
- Figures 11 and 12 show the assembly of a deflector arrangement to a supporting ring according to another variant embodiment suitable for the invention.

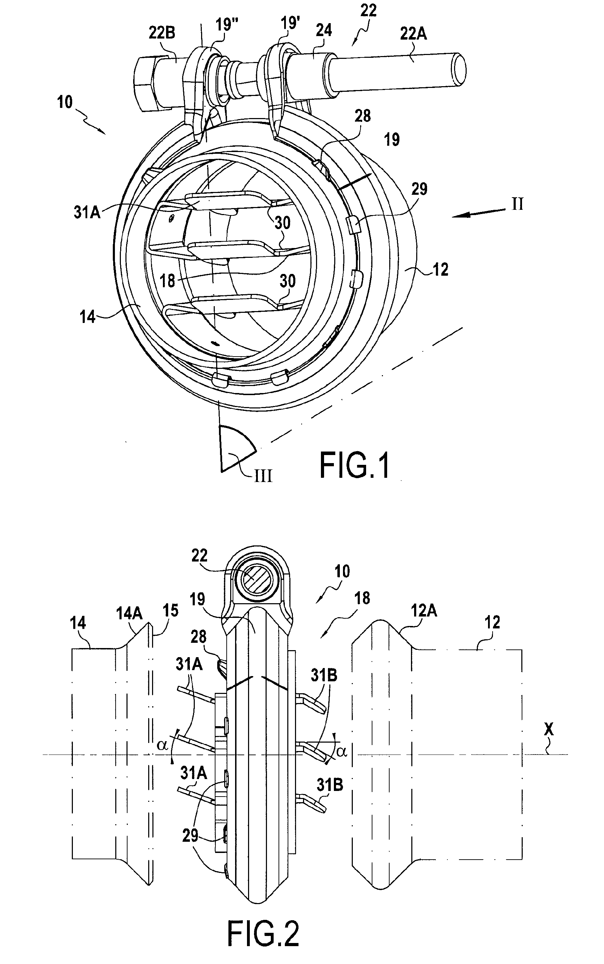

The clamping system shown in figures 1 to 4 comprises a collar 10 to be tightened on respective bearing surfaces 12A and 14A formed at respective ends of two tubes 12, 14 for connecting the tubes together.

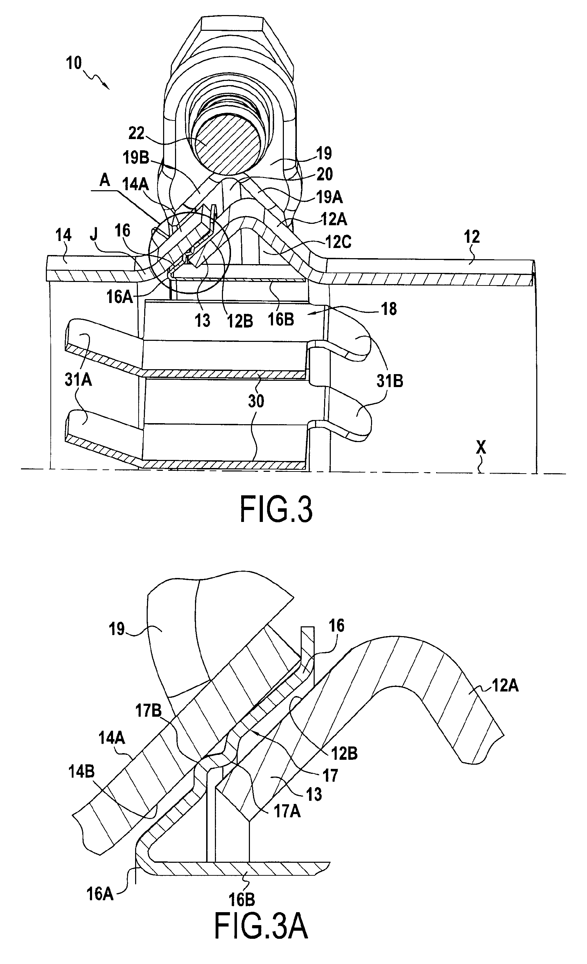

The system also comprises a washer 16 which, as shown in figures 3 and 3A, is inserted between respective sealing surfaces 12B, 14B of the tubes. Also, the system comprises a deflector arrangement 18 supported by the washer 16.

The collar 10 is for example of the type described in EP 0 305 232 or US 7,399,005. The collar has a band 19, the inside periphery of which defines a setback 20 (see figure 3) into which the bearing surfaces 12A and 14A of the tubes 12 and 14 can be inserted. The setback and the bearing surfaces have shapes such that tightening the band of the collar constrains the ends of the tubes to move closer together. As shown, the band is advantageously V-shaped in cross-section, while the diameter of each bearing surface 12A, 14A increases progressively going towards the free ends of the tubes. For example, said bearing surfaces are frustoconical in shape.

The band 19 has tabs, respectively 19' and 19", which are turned out substantially radially to form bearing tabs. These bearing tabs are provided with holes so as to enable the shank 22A of a bolt 22 to pass through said tabs. The head 22B of the bolt 22 co-operates with the tab 22B, while the other tab 22A retains a threaded nut 24 for engaging the thread of the shank 22A. Turning the head 22B of the bolt 22 in the tightening direction causes the bolt 22 to be screwed in the nut 24, thus urging the tabs 19' and 19" towards each other which causes the diameter of the collar to be reduced.

In these drawings, the end 15 of the tube 14 is a female end, its inside periphery being flared. The bearing surface 14A is formed on the outside periphery of this tube, at the free end thereof, whereas the sealing surface 14B is formed on the inside periphery, also at the free end. The end of the tube 12 is a male end which, beyond the bearing surface 12A, has an extension 13 whose diameter decreases going towards the free end. This extension 13 can thus be inserted into the flared end 15 of the tube 14. The sealing surface 12B of the tube 12 is formed on the outer periphery of the extension 13.

When the clamping system is mounted on the tubes, the branch 19A of the V-shaped cross-section of the collar co-operates with the bearing surface 12A of the tube 12 and the branch 19B of said V-shaped cross-section co-operates with the bearing surface 14A of the tube 14. The washer 16 has a frustoconical shape and is disposed inside said branch 19B. When the collar is in the non-tightened state, with the washer secured to the collar 10, the washer 16 extends inside the collar, substantially to the junction between the branches 19A and 19B of the cross-section of the collar, i.e. to the vertex of the V formed by said branches.

The washer is secured to the collar by fixing tabs analogous to the ones disclosed in US 7,399,005. Thus, the fixing tabs comprise internal tabs 26 to co-operate with the inside periphery of the band 19 of the collar (with their free ends bearing against the inside of the branch 19B) and external tabs 28, 29 to co-operate with an edge of the band or with the outside periphery thereof. The ends of the tabs 28 are slightly bent outwardly and rest on the edge of the branch 19B. The ends of the tabs 29 are bent outwardly and folded back so as to be hooked onto the edge of the branch 19B. Thus, the washer can be secured to the collar, so as to be supported by said collar and centered with respect to its longitudinal axis X so that the collar-and-washer assembly can be mounted as a whole on the end of the tube 14 before its connection to the end of the tube 12. For pre-fitting this assembly to this tube, the securing tabs can serve as pre-fitting tabs. To this end, the external tabs 28 or 29 can be formed with pre-fitting tongues as disclosed in US 7,399,005.

The washer has a sealing portion 17 which, being adapted to be arranged between the respective sealing surfaces of the tubes, is inclined with respect to their longitudinal axis X. In this case, the washer can be made from a sheet of metal. It has sealing beads 17A and 17B formed by annular deformations of the sealing portion so as to be elastically deformable when the collar is clamped on the tubes, thus enabling a leaktight connection of the tubes.

The deflector arrangement 18 is supported by the washer 16. In the example shown in figures 1 to 4, the deflector arrangement 18 comprises several deflector parts 30 which, when the tubes are connected (see figure 3), are located in the stream of fluid circulating in the tubes, at a distance from an inner periphery 16A of the washer. In the example shown, three deflector parts 30 are provided, comprising a medium reflector part arranged substantially on the longitudinal axis X of the tubes (which is the same as the collar axis, when the collar in mounted on the tubes), and two side reflector parts arranged on respective sides of the medium reflector part, each at substantially half the distance between said medium reflector part and the inner periphery of the washer.

According to the invention, at least one deflector part 30 of the deflector arrangement is located at a distance from the inner periphery of the washer. This means that fluid can circulate in the main stream of circulation (that is: not in the recess 12C formed by the V shape of the end of the tube 12 under the surfaces 12A and 12B), between the inner periphery 16A of the washer and the said at least one deflector part. In other words, the main vein of fluid, the diameter of which corresponds to the inner diameter of the cylindrical parts of the tubes, passes on the at least one deflector part.

In the example shown, each deflector part 30 comprises a main blade 30A which is substantially parallel to a plane comprising a diameter D of the tubes and the axial direction X. The main blades 30A of the respective deflector parts 30 are parallel one to the other and parallel to the axial direction.

Also, in the example shown, each deflector part comprises at least one inclined blade, which is inclined with respect to the axial direction. In this example, the inclined blades are arranged at respective ends (as viewed in the axial direction) of the deflector parts. More precisely, at their first ends, the deflector parts 30 have an inclined blade 31A which is formed in a plane inclined by an angle α with respect to the main blade. At their opposite end, the deflector parts 30 have two inclined blades 31B also inclined by angle α. The blades 31A and 31B are parallel one to the other, the angle of a blade 31A or 31B α being positive when measured from the blade to the axial direction. When viewed along a direction D of a diameter, parallel to the main blade, the inclined blade 31A is in a central part of the deflector part, whereas the inclined blades 31B are at respective end parts thereof.

Also, the central part of the main blade 30A is parallel to a plane comprising a diameter D of the tubes and the axial direction X, in the central part thereof, corresponding to the location of the inclined blade 31A in an axial projection. Conversely, those parts of the main blade 30 which correspond to the inclined blades 31B in an axial projection are slightly raised in the transverse direction going from the axis X towards the inner periphery of the washer.

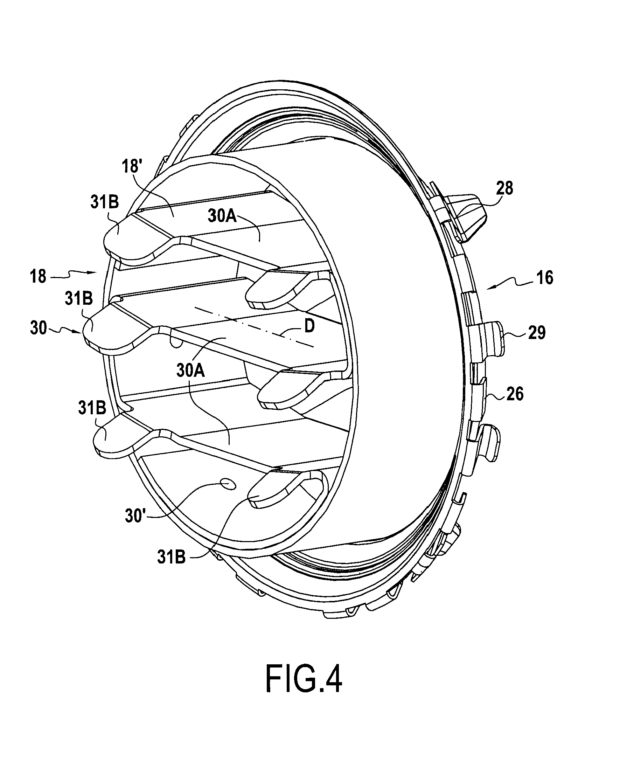

The deflector parts 30 are formed in a band of metal, the longitudinal edges of which are cut so as to form extensions in which the inclined blades are formed. This band is bent so as to be inserted in the washer. Thus, the band forms a common deflector element 18', to which the deflector parts belong. As shown in figures 1 and 4, such bending is made so that the band has a serpentine shape enabling the band to be readily mounted in the washer.

As seen in the drawings, especially in figure 3, the inner periphery 16A of the washer 16 has an axially extending portion 16B forming a cylindrical wall that extends rearwardly from said inner periphery 16A so as to cover inwardly the recess 12C. This axially extending portion 16B extends from the inner periphery 16A of the washer 16, up to the junction J between the cylindrical part of the tube 12 and the bearing surface 12A.

Also, the axially extending portion 16B forms a supporting ring that supports the at least one deflector part (in this case, the common deflector element 18'). Thus, the axially extending portion 16B forms a supporting ring of the deflector arrangement that is supported by the washer 16 (as it is formed in one piece with the washer), and that supports the at least one deflector part.

In the embodiment of figures 1 to 4, the deflector parts are directly secured to the supporting ring formed by the axially extending portion 16B, for example by welding, riveting or clinching, or crimping, corresponding securing spots 30' being shown in figure 4.

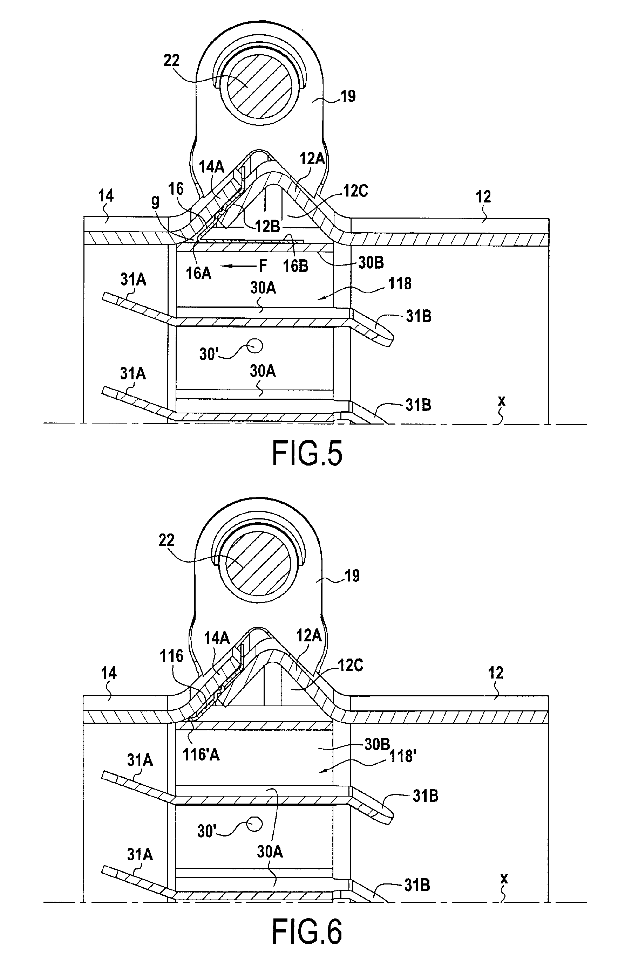

The variant embodiment of figure 5 is very similar to the one of figures 1 to 4, except that the deflector parts 30 of the deflector arrangement 118 are secured to the axially extending portion 16B of the washer 16 via a supporting ring 30B, which is a separate element from the washer and is directly secured to the axially extending portion 16B. The deflector parts 30 are formed in a common deflector element 118' made of a band arranged in a serpentine shape.

The supporting ring 30B covers the recess 12C inwardly. In this case, the supporting ring 30B extends beyond the inner periphery 16A of the washer in the axial direction F going from said inner periphery to the opposite of the axially extending portion 16B. Thus, the supporting ring covers even the small gap g that exists beyond the inner periphery 16A of the washer in the recess 12C. At its opposite axial end, the supporting ring 30B extends up to the junction J between the cylindrical portion of the tube 12 and the bearing surface 12A.

The variant embodiment of figure 6 is also very similar. The difference with figure 5 is that the washer 116 is formed of an element adapted to be fitted between the respective sealing surfaces of the tubes without an axially extending portion. Thus, in the example shown, in which these sealing surfaces have a frustoconical shape, the washer also has a frustoconical shape and its sealing portion 117 is similar to the one of the washer 16. Also, the washer can have fixing tabs and pre-fitting tabs similar to those described above in relation to the washer 16. The supporting ring 30B of the deflector arrangement 118 is analogous to the one of figure 5 but is secured to the inner periphery 116A of the washer which, therefore, has a short axial rim 116'A extending to the front of the washer. Such securing can be achieved by any means, including a continuous seam weld.

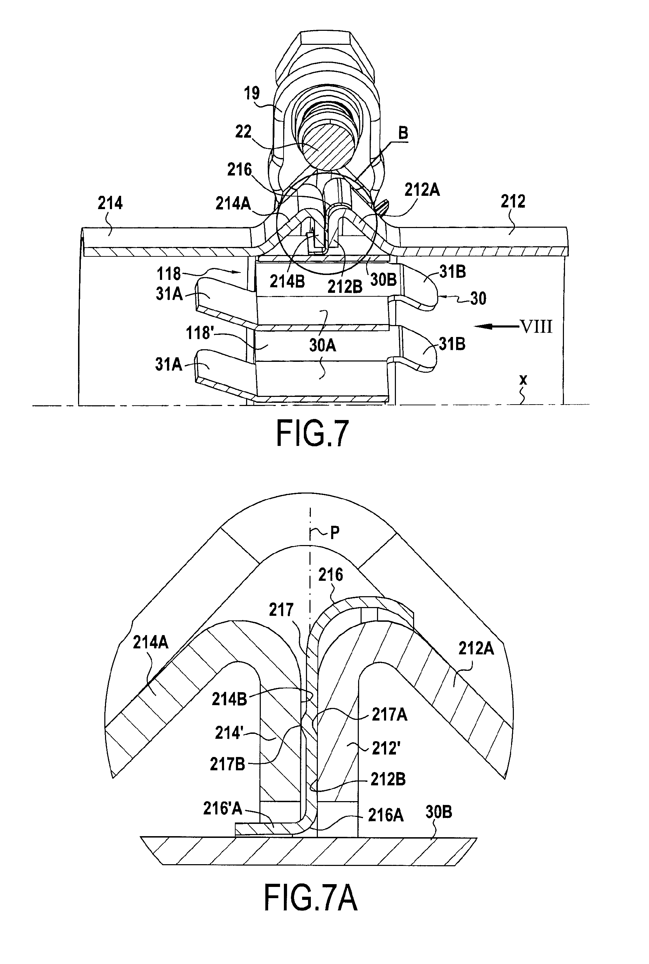

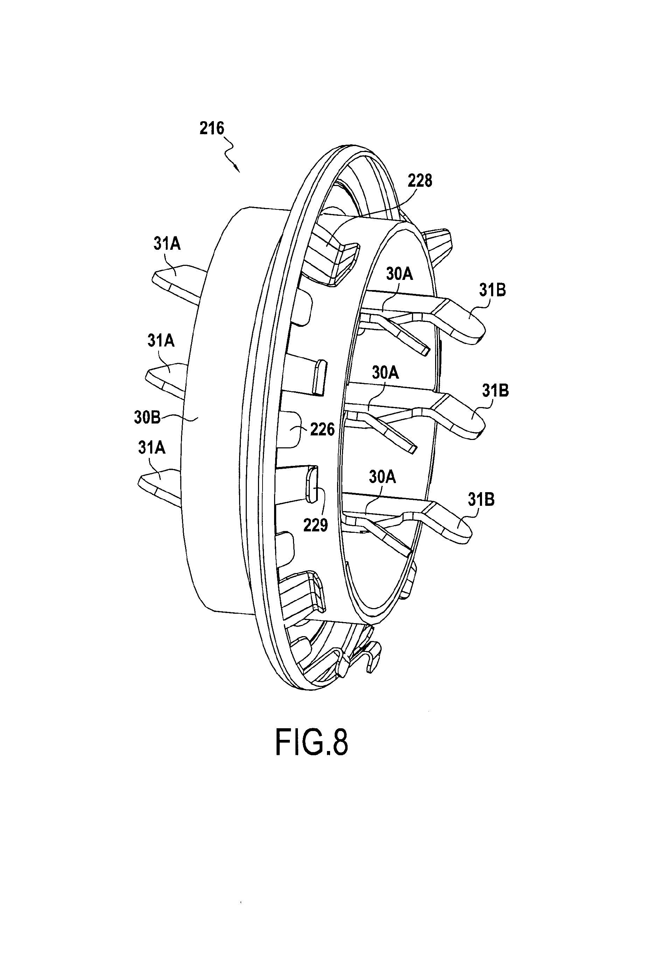

Figures 7, 7A and 8 show another variant embodiment, in which the sealing surfaces and of the tubes extend radially. Thus, the sealing portion of the washer extends in a plane P that is substantially perpendicular to the axial direction X.

In this variant embodiment, the collar 10 is analogous to the one described above in relation to figures 1 to 4. The tubes 212 and 214 have respective bearing surfaces 212A and 214A of frustoconical shape, analogous to the bearing surfaces 12A and 14A of the tubes 12 and 14. However, from the outside edges (as seen radially from the axial axis X) of the bearing surfaces 212A and 214A, the tubes have respective radial wall portions 212' and 214' extending radially inwardly, so that their free edges define a diameter substantially equal to (or slightly greater than) the diameter of the cylindrical portions of the tubes. In this case, the respective sealing surfaces of the tubes are formed by the outside surfaces 212B and 214B of the wall portions 212' and 214' that face each other. The sealing portion 217 of the washer 216, provided with sealing beads 217A and 217B, extends radially, in the plane P.

In this case, the deflector arrangement 118 is similar to the one of figure 6, the deflector parts 30 being formed in a common deflector element 118' and the supporting ring 30B being secured to the washer 216, more precisely to the axial rim 216'A of the inner periphery 216A of the washer.

As shown in figure 8, the washer 216 has fixing tabs with internal tabs 226 and external tabs 228, 229 analogous to those of the washer 16 as previously described.

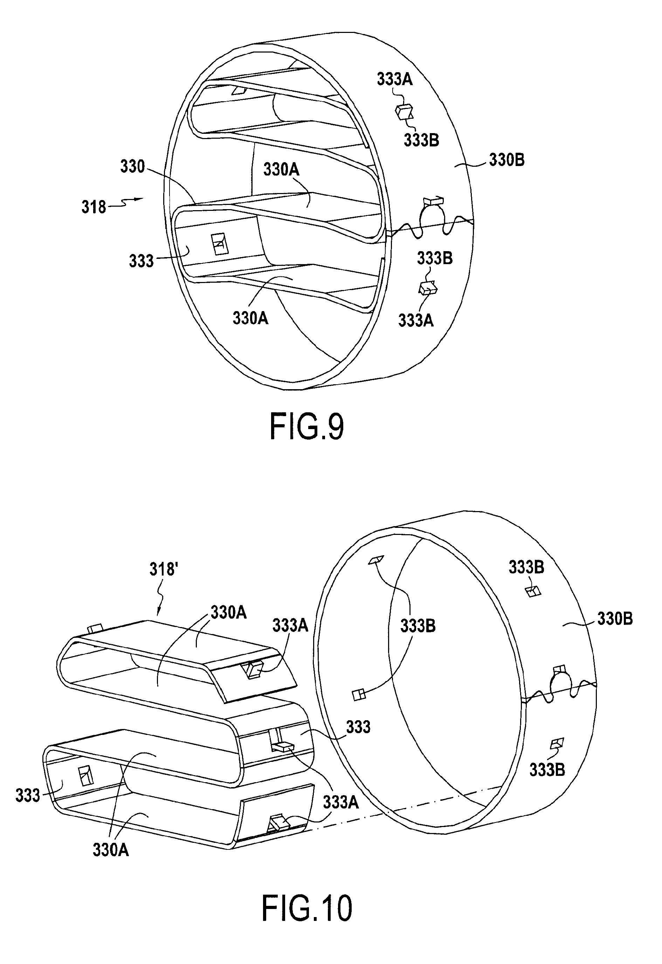

Figures 9 and 10 show the assembly of a deflector arrangement to a supporting ring. In this case, the deflector arrangement 318 is similar to the deflector arrangement 118 described previously, except that its deflector parts 330 are deprived from inclined blades and, thus only comprise main blades 330A. The deflector parts 330 are formed in a band of metal which is bent in a serpentine shape and thus forms a common deflector element 318'. The supporting ring 330B is formed of a band of metal wound on itself so as to form a closed ring. The ends of the wound band are connected by any suitable method including welding. In the example shown, these ends have complementary shapes and are thus fitted together. Also, the peripheral walls portions 333 of the common deflector element 318' that contact the inner periphery of the ring 330B are formed with hooks 333A that are inserted into corresponding holes 333B of the ring 330B for securing the common deflector element 318' to the ring. The hooks can be riveted in the holes.

Of course, this deflector arrangement can be used in the above mentioned embodiments.

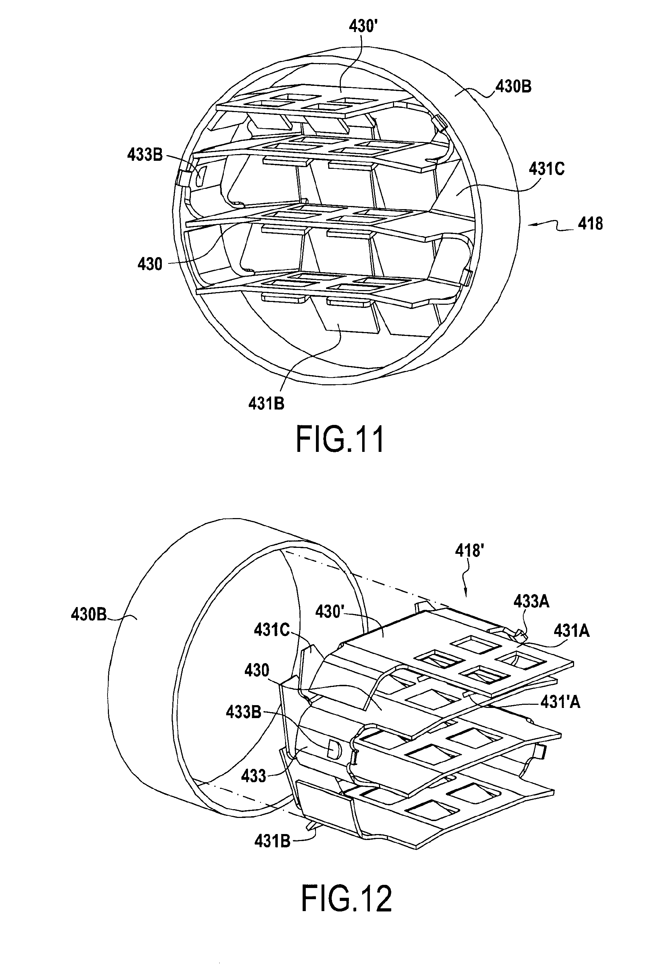

In figures 11 and 12, the deflector arrangement 418 is similar to the one of figures 9 and 10, except that the main blades 430A of the deflector parts 430 are extended, at one axial end thereof, by axially extending blade portions 431A, in which series of tongues 431'A are cut out and bent so as to form inclined blades. Of course, such tongues could be provided in other portions of the deflector parts, for example in the main blade. Similar tongues could be provided in the deflector parts 330 of figures 9 and 10, also. The deflector arrangement 418 also defers from the one shown in figures 9 and 10 in that the other axial end of the deflector parts 430 are provided with inclined blades 431B and 431C. The inclined blades 431B are inclined in the same direction, and the inclined blades 431C are inclined in the same direction, which is substantially opposite to the direction of inclination of the inclined blades 431B. In this case, the inclined blades 431B are arranged by pairs of blades, arranged in a medium portion of the deflector parts, as seen in a transverse direction thereof, whereas the inclined blades 431C are also arranged by pairs of blades, respectively arranged close to the end of a deflector part, as seen on the transverse direction, such that the blades 431B of a deflector part are arranged between the respective blades 431C of this deflector part. In this case, one of the deflector parts 430' is located close to the inner periphery of the ring 430B and it is consequently deprived from inclined blades in one direction since, otherwise, such inclined blades would be too close to the inner periphery of the ring for ensuring the deflection function.

Of course, the arrangement of deflector blades that has just been described can be changed within the scope of the invention. For example, as mentioned previously, the deflector parts can be deprived from inclined blades, in which case the deflection function merely consisted in stabilizing the flow of fluid in the axial direction. Also, if inclined blades are present, any number of suitable inclined blades can be present. If the deflector parts comprise inclined blades having opposite directions of inclination, it is possible that one deflector part comprises only inclined blades inclined in the same direction whereas other deflector parts (e.g. adjacent deflector parts) comprise inclined blades inclined in another direction, possibly the opposite direction. For a deflector part, the inclined blades inclined in one direction and in another direction can be alternatively arranged along the transverse direction. Also, generally speaking, inclined blades inclined in the same direction may be inclined by the same angle, or not.

Such arrangement of the deflector parts is compatible with anyone of the above-described embodiments, as far as the mounting of the deflector arrangement in the washer is concerned.

The variant embodiment of figures 11 and 12 also differs from the one shown in the previous figures in the way of securing the common deflector to the supporting ring. Namely, in this case, one of the axial ends of the common deflector element 418' (also formed in a band arranged in a serpentine shape) has hooks 433A formed on peripheral wall portions 433 of the common deflector element that contact the inner periphery of the ring 430B. The hooks 433A are hooked on the corresponding edge of the ring 430B. For preventing axial movement of the common deflector element with respect to the ring at least one of sale peripheral wall portion is provided with a tab 433B which is punched out into the inner periphery of the supporting ring.

## Claims

1. A connection device comprising a washer (16; 116; 216) adapted to be inserted between respective sealing surfaces (12B, 14B; 212B, 214B) of two tubes (12, 14; 212, 214) to be connected by a clamping system (10),
**characterized in that** it comprises a deflector arrangement (18; 118; 318; 418), supported by the washer and comprising at least one deflector part (30; 330; 430) to be located in a stream of fluid circulating in the tubes, at a distance from an inner periphery (16A; 116A; 216A) of the washer(16;116; 216).

2. A connection device as claimed in claim 1, **characterized in that** the deflector arrangement (18; 118; 318; 418) comprises a supporting ring (16B; 30B; 330B; 430B) supported by the washer (16; 116; 216), said supporting ring supporting said at least one deflector part (30; 330; 430).

3. A connection device as claimed in claim 2, **characterized in that** the at least one deflector part(30; 330; 430) is secured to the supporting ring (16B; 30B; 330B; 430B) by at least one of welding, riveting, clinching or crimping.

4. A connection device as claimed in any one of claims 1 to 3, **characterized in that** the deflector arrangement (18; 118; 318; 418) comprises a plurality of deflector parts (30; 330; 430), formed in one common deflector element (18'; 118'; 318'; 418').

5. A connection device as claimed in claim 4, **characterized in that** the common deflector element (18'; 118'; 318'; 418') has a serpentine shape.

6. A connection device as claimed in any one of claims 1 to 5, **characterized in that** the at least one deflector part (30; 330; 430) comprises at least one wall portion (30A; 330A; 430A) arranged substantially axially.

7. A connection device as claimed in any one of claims 1 to 6, **characterized in that** the at least one deflector part (30; 430) comprises at least one inclined portion (31A, 31B; 431'A, 431B, 431C), which is inclined with respect to the axial direction (X).

8. A connection device as claimed in claim 7, **characterized in that** the at least one deflector part (430) comprises at least one wall portion (431A) having a tongue (431'A) cut out therein and bent.

9. A connection device as claimed in any one of claims 2 to 8, **characterized in that** the inner periphery (16A; 116A; 216A) of the washer (16; 116; 216) has an axially extending portion (116'A; 216'A), to which the supporting ring (30B; 330B; 430B) is secured.

10. A connection device as claimed in any one of claims 2 to 9, **characterized in that** the supporting ring (16B; 330B; 430B) extends axially.

11. A connection device as claimed in any one of claims 1 to 10, **characterized in that** the washer (16; 116; 216) has at least one sealing portion (17; 117; 217) arranged in a plane which is inclined with respect to the axial direction.

12. A connection device as claimed in claim 11, **characterized in that** said plane (P) is substantially perpendicular to the axial direction.

13. A clamping system for connecting two tubes (12, 14; 212, 214) together in a leaktight manner, the system comprising a collar (10) suitable for being tightened on respective bearing surfaces (12A, 14A; 212A, 214A) of the tubes,
**characterized in that** it comprises a connection device according to any one of claims 1 to 12 and **in that** the washer (16; 116; 216) is linked to the collar for being inserted between respective sealing surfaces(12B, 14B; 212B, 214B) of the tubes.

14. A clamping system as claimed in claim 13, **characterized in that** the collar (10) has a band (19), the inside periphery of which defines a setback (20) and **in that** the washer (16; 116; 216) has a sealing portion (17; 117; 217) that extends inside said setback.

15. A clamping system as claimed in claim 13 or 14, wherein the connection device is made according to claim 2 and anyone of claims 2 to 14, **characterized in that** at least part of the supporting ring (16B; 30B; 330B; 430B) extends axially from the inner periphery of the washer (16; 116; 216) so as to cover said setback (20) inwardly.
